# EUROPÄISCHE PATENTSCHRIFT

(11) **EP 0 819 913 B1**
(45) Veröffentlichungstag und Bekanntmachung des Hinweises auf die Patenterteilung: **17.10.2001**
(21) Anmeldenummer: 97111288.3
(22) Anmeldetag: 04.07.1997
(51) Int. Cl.: G01D 5/244, G01D 5/245

(54) **Verfahren und Vorrichtung zur Positionierung von zyklisch bewegten insbesondere rotierenden Maschinenteilen**
Method and apparatus for the positioning of cyclically moving, especially rotating machine parts
Procédé et dispositif pour positionner des pièces de machine à déplacement cyclique et plus particulièrement rotationnel

(30) Priorität: 17.07.1996 DE 19628765
(43) Veröffentlichungstag der Anmeldung: 21.01.1998
(73) Patentinhaber: Braun, Paul-Wilhelm, Dipl.-Ing., 53842 Troisdorf (DE)
(72) Erfinder: Braun, Paul-Wilhelm, Dipl.-Ing., 53842 Troisdorf (DE)
(74) Vertreter: Müller-Wolff, Thomas, Dipl.-Ing.

(56) Entgegenhaltungen:
- EP-A- 0 349 792
- AT-A- 385 355
- DE-A- 2 730 715
- US-A- 4 145 608

## Beschreibung

Die Erfindung betrifft ein Verfahren zur Positionsbestimmung von bewegtem Maschinenteilen, wobei ein optisches Signal von einem Emitter 20 über ein mit Strichcodemarkierungen 21 versehenes Taktlineal 22 von einem Sensor 23 empfangen wird und der Sensor 23 ein elektrisches Taktsignal entsprechend der Strichcodemarkierung an einen Zähler weitergibt sowie eine Vorrichtung zur Durchführung des Verfahrens.

Aus der DE 27 30 715 ist eine Einrichtung zur Längenmessung bekannt, bei der ein aus zwei oder mehreren Teilstücken zusammengesetzter Maßstab verwendet wird. Um Meßungenauigkeiten an der Stoßstelle zu verringern, weist ein über den Maßstab verstellbarer Schlitten zwei Gruppen von Phototransistoren auf, die an der Stoßstelle wechselweise auf einen Zähler aufgeschaltet werden. Die Schaltimpulse werden von Steuer-Phototransistoren über eine vom Maßstab getrennt angeordnete Steuerspur erzeugt. Die Länge und Frequenz der Impulse wird durch sogenannte "Fensteröffnungen" bestimmt, die durch die Codierung in "lichtdurchlässig/lichtundurchlässig" vorgegebene Bereiche auf dem Taktlineal entstehen. Dadurch wird der aus einem Sender austretende Lichtstrahl von einem in der optischen Achse des Lichtstrahls liegenden Empfänger in einen Impuls umgewandelt, wobei die Art des Impulses von der Beschaffenheit der Fensteröffnung abhängt.

Entsprechend den Angaben der DE-A-27 30 715 erscheint es daher grundsätzlich möglich, mehrere Taktlineale kürzerer Länge zu einem neuen Taktlineal mit entsprechend größerer Arbeitslänge zusammenzusetzen. Der dabei auftretende Versatz zwischen Taktlineal und Steuerspur kann jedoch insbesondere bei größeren Längen und schnellbewegten Maschinenteilen das Lichtsignal verfälschen und zu Ungenauigkeiten in der Positionsbestimmung führen. Ein weiteres Problem besteht darin, daß der Versatz an den Stoßstellen bei einer Reparatur und Demontage der Längenmeßeinrichtung verändert wird, so daß ein Fehler in der Codierung auftreten kann, insbesondere bei getrennt angeordneten Taktlinealen und Steuerspuren. Dieses führt zwangsläufig zu Meßfehlern und damit zu einer falschen Positionsbestimmung der Maschinenteile.

Aufgabe der vorliegenden Erfindung ist es daher, eine Vorrichtung und ein Verfahren anzugeben, mit der/dem auch an den Stoßkanten die in den übrigen Bereichen des Taktlineals erzielte Meßgenauigkeit stets erreicht wird. Die Aufgabe wird durch die im Patentanspruch 1 angegebenen Merkmale gelöst. Es hat sich gezeigt, daß durch Verwendung von zwei Sensoren und zusätzlichen Comparator-Einheiten die Fehlerquellen an der Stoßkante des Taktlineals eliminiert werden können.

Im folgenden wird die Erfindung anhand mehrerer Ausführungsbeispiele näher erläutert. Es zeigen:
- Figur 1, 1a, 1b: Erfindungsgemäße Vorrichtung mit einem bewegten Sensorschlitten in der Draufsicht;
- Figur 2: Teil einer erfindungsgemäßen Vorrichtung mit einem bewegten Taktlinealabschnitt, geschnitten;
- Figur 3a, 3b: Fehlerermittlung bei einem gekrümmten Taktlinealabschnitt

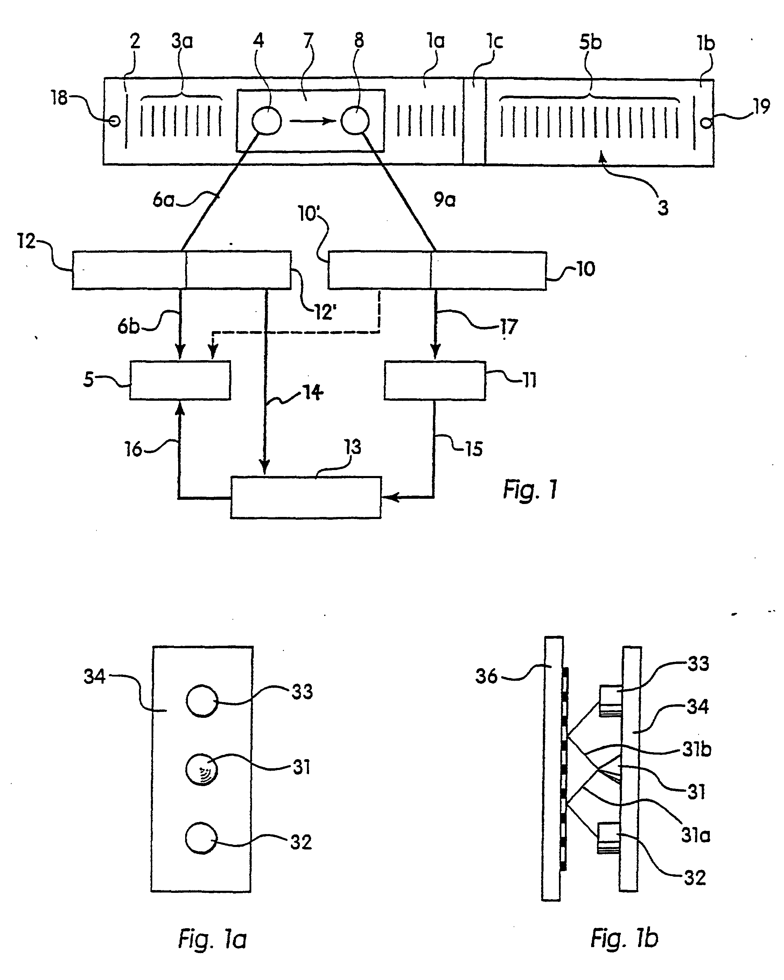

In Figur 1 ist die Vorrichtung zur Positionserfassung von bewegten Maschinenteilen an einer Stoßkante des Taktlineals dargestellt, das über die Befestigungsmittel 18, 19 auf einem Zylinder befestigbar ist. Das Taktlineal besteht aus den Codeträgerabschnitten 1a, 1b mit einer Stoßkante 2, wobei jeder Codeträger gleichbeabstandete Codemarken 3a, 3b trägt. An der Schnittstelle befindet sich eine Fensteröffnung 1 c.

Auf einem Sensorschlitten 7 sind zwei Sensoren 4, 8 angeordnet. Der Sensorschlitten kann beispielsweise an einem Druckerkopf befestigt sein und wird mit diesem über das Taktlineal geführt. Die Sensoren 4, 8 empfangen optische Signale von einem Sender, der in der Darstellungsebene nach Figur 1 hinter dem Sensorschlitten 7 liegt und daher nicht sichtbar ist.

Bei einer Bewegung des Taktlineals in Pfeilrichtung empfangen beide Sensoren 4, 8 Signale entsprechend den am Schlitten vorbeigeführten Codemarkierungen. Dabei ist der Sensor 4 über Leitungen 6a, 6b mit einem Zählwerk 5 verbunden, das von der Aus gangsposition 2 aus gesehen die überstrichenen Codemarken 3a erfaßt und abspeichert.

Sobald der Sensor 8 die Fensteröffnung 1c erreicht, bemerkt ein hinter dem Sensor 8 an der Leitung 9a liegender Comparator 10 eine Veränderung des Codemarken-Abstandes. Diese Veränderung kann beispielsweise durch einen Vergleich eines Prüfsignals mit dem empfangenen Codesignal erreicht werden. Hierzu ist im Comparator 10 eine Prüfeinrichtung 10' integriert.

Stellt nun die Prüfeinrichtung 10' fest, daß ein verändertes Codesignal über Leitung 9a empfangen wurde, wird das Zählwerk 5 von der Leitung 6b getrennt und ein weiteres Zählwerk 11 über Leitung 17 mit dem Sensor 8 verbunden. Dies bedeutet, daß bei Bewegung des Sensorschlittens 7 über die Kontaktstelle der beiden Codeträger 1a, 1b hinweg das Signal nicht mehr im Zähler 5, sondern im Zählwerk 11 gespeichert wird.

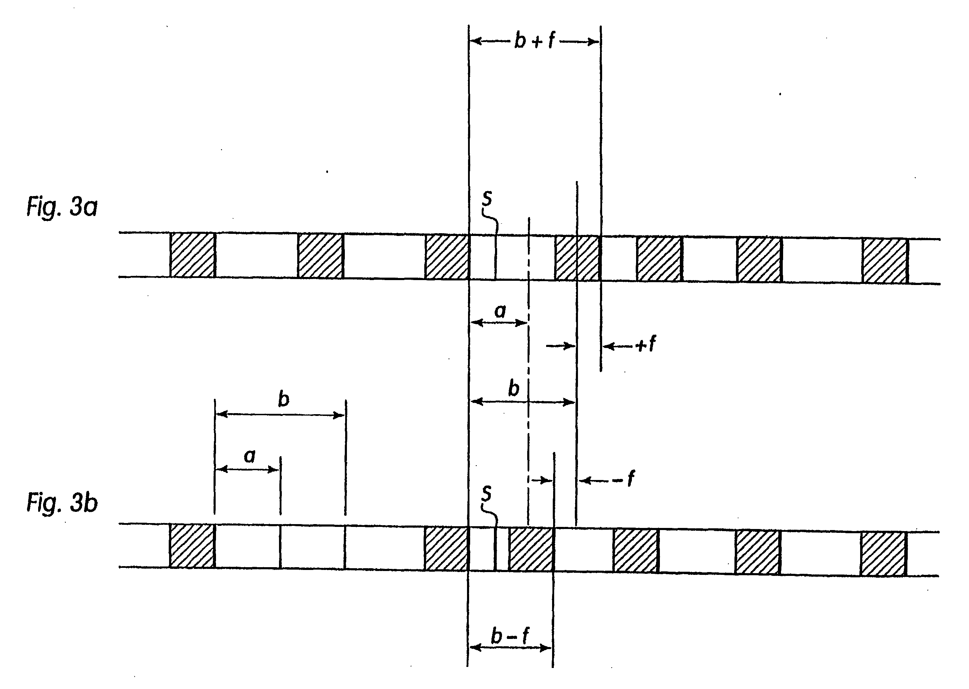

Gleichzeitig wird beim Übergang von einem zum anderen Taktlinealabschnitt durch Vergleich des gemessenen Codesignals mit dem Prüfsignal eine Fehlerabweichung erkannt und dieser Fehler durch gleichmäßige Verteilung auf die insgesamt vorhandene Codemarken-Abschnitte eliminiert. Damit entsteht eine kontinuierliche Taktfolge, als ob nur ein Taktlineal ohne Fehlerstelle vorliegen würde. Dies sei anhand von Figur 3a,b näher erläutert.

In Figur 3a ist die Schnittstelle S so gelegt, daß ein Fehler +f entsteht. Hierbei ist der Codemarken-Abstand b um den Wert +f vergrößert, so daß nach dem Überfahren der Schnittstelle S der Wert für den Codezähler um +f vergrößert werden muß, damit der Anschlußfehler kompensiert wird.

In Figur 3b ist die Schnittstelle S so gelegt, daß ein Fehler -f entsteht. Demzufolge ist der Codemarken-Abstand b um den Betrag -f zu verkürzen, damit der Anschlußfehler kompensiert wird. Durch die jeweilige Addition bzw. Subtraktion der Fehlergröße f wird beim Übergang vom ersten zum zweiten Taktlineal der Wert des jeweiligen Zählwerkes entsprechend korrigiert.

Bei Weiterbewegung des Sensorschlittens 7 über die Fensteröffnung lc hinweg, erhält auch der Sensor 4 ein verändertes Codesignal, das nicht mit dem Testsignal in einem ihm zugeordneten Comparator 12 mit Prüfeinrichtung 12' übereinstimmt. In diesem Moment wird das Zählwerk 11 stillgesetzt und die bisher von ihm aufsummierten Signale werden über eine Transfereinheit 13 an das nun wieder in Betrieb gesetzte Zählwerk 5 weitergegeben. Somit hat nach dem Überfahren der Fensteröffnung lc das Zählwerk 5 die genaue Position des bewegten Maschinenteiles, beispielsweise eines Druckerkopfes ermittelt. Die Zählung kann weiter fortgesetzt werden. Bei einem neuen Taktlineal wird die neue Kodierung vom Sensor 8 erfaßt und der Fehler wird dann durch Kalibrierung kompensiert.

Somit sind also die Bewegungen eines zylindrischen Maschinenteils, wie z.B. einer Welle, eines Hohlzylinders oder eines Antriebsrades, erfaßbar. Dazu können die gebogenen Taktlineale am Umfang des zylindrischen Teiles befestigt werden und über entsprechend radial angeordneten Sensor-Einheiten zur Positionierung überwacht werden. Bei größerem Umfang des zylindrischen Teiles können auch mehrere Taktlineale hintereinander angeordnet sein, wobei die Schaltung der in Laufrichtung hintereinander angeordneten Sensoren, wie im vorhergehenden Beispiel beschrieben, erfolgt.

Die Genauigkeit der erfindungsgemäßen Vorrichtung kann auch dadurch verbessert werden, daß beim Anfahren und Abbremsen des Sensorschlittens 7 ein entsprechend verändertes Prüfsignal für den Anfahr- und Bremsvorgang zur Verfügung gestellt wird. Dadurch wird vermieden, daß die im Beschleunigungszustand empfangenen Codesignale aufgrund ihrer veränderten Struktur als Indikatoren für einen Wechsel der Codeträger verstanden werden.

Eine Weiterentwicklung von Sensor/Emitter-Einheit besteht darin, daß der Emitter 31 zwischen den Sensoren 32 und 33 auf dem Transportschlitten 34 angeordnet ist. Die Codeträger sind dann mit einer reflektierenden Schicht versehen, so daß die vom Emitter 31 ausgesandten Signale reflektiert werden und im Winkel von den Sensoren 32, 33 empfangen werden.

In Figur 1b ist die Situation im Querschnitt durch ein Taktlineal und ein Sensorschlitten dargestellt. Die aus dem Emitter 31 emittierten Lichtstrahlen 31a, 31b werden an der mit Strichmarkierungen 35 versehenen Oberfläche des Taktlineals 36 reflektiert und von den Sensoren 32, 33 empfangen. Selbstverständlich ist auch eine Anordnung von mehreren Sensoren möglich, was in der Draufsicht auf einen Sensorschlitten 34 in Figur 1a dargestellt ist.

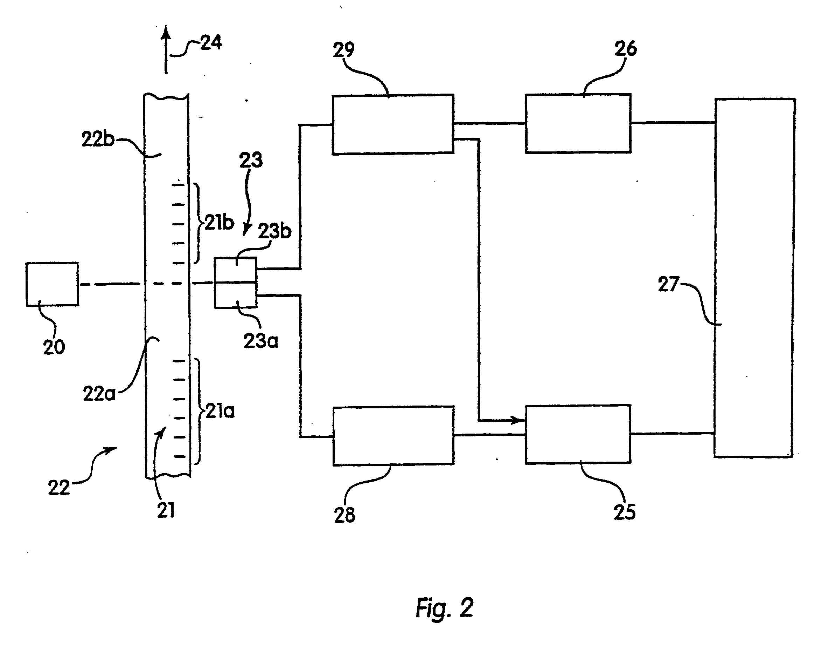

In Figur 2 ist ein bewegtes Taktlineal 22 mit verschiedenen Strichcodes 21 versehen. Ein vom Emitter 20 emittiertes, optisches Signal wird von einem Sensor 23 empfangen, der ein elektrisches Taktsignal entsprechend der Strichcodemarkierung an einen Zähler weitergibt.

Das Taktlineal 22 besteht aus zwei Taktlineal-Abschnitten 22a, 22b, die mit versetzten Strichcodemarkierungen 21a, 21b versehen sind.

Ähnlich wie im vorhergehenden Beispiel besteht die Sensor-Einheit aus zwei Einzelsensoren 23a, 23b, die in Bewegungsrichtung des Taktlineals hintereinander angeordnet sind.

Der in Bewegungsrichtung vorn liegende Sensor 23b schaltet bei Erreichen eines neuen Taktlineal-Abschnittes 21b einen Zähler 25 des ersten Sensors 23a ab und zählt dann die Strichcodemarkierungen 21b des neuen Taktlineal-Abschnittes 22b. Die gezählten Abschnitte werden in einer Transfer-Einheit 27 gespeichert.

Sobald der erste Sensor 23a ebenfalls den neuen Taktlineal-Abschnitt 21b erreicht, wird der Zähler 26 des zweiten Sensors 23b stillgesetzt. Nun beginnt der erste Zähler 25 weiterzuzählen, wobei die vom zweiten Zähler 26 an die Transfer-Einheit weitergegebenen Signale mit dem Inhalt des ersten Zählers 25 aufsummiert werden.

Zur Verbesserung des Signalflusses sind zusätzlich zu den Zählern 25, 26 Comparatoren 28, 29 mit den Einzelsensoren 23a, 23b verbunden. Diese Comparatoren können Veränderungen der Strichcodemarkierungen durch Vergleich mit Testsignalen feststellen und dabei die entsprechenden Schaltvorgänge der Zähler 25, 26 bzw. der Transfer-Einheit 27 auslösen.

Der beschriebene Schaltungsablauf ist nicht nur in einer Richtung, sondern in jeder Bewegungsrichtung wirksam. Es kommt dabei nur darauf an, daß die Schaltzeit für die Sensoren ausreicht, damit keine Fensteröffnung am Sensor vorbeiläuft, ohne erfaßt und kompensiert zu werden.

Für schnellbewegte Maschinenteile mit hohen Beschleunigungswerten ist es erforderlich, die Sensoren in einem Abstand von mehreren Strichcodierungen anzuordnen. Erfahrungswerte zeigen, daß die Sensoren mindestens einen Abstand von drei Strichcodes aufweisen sollten, damit der Funktionsablauf für die Positionserfassung zuverlässig arbeiten kann.

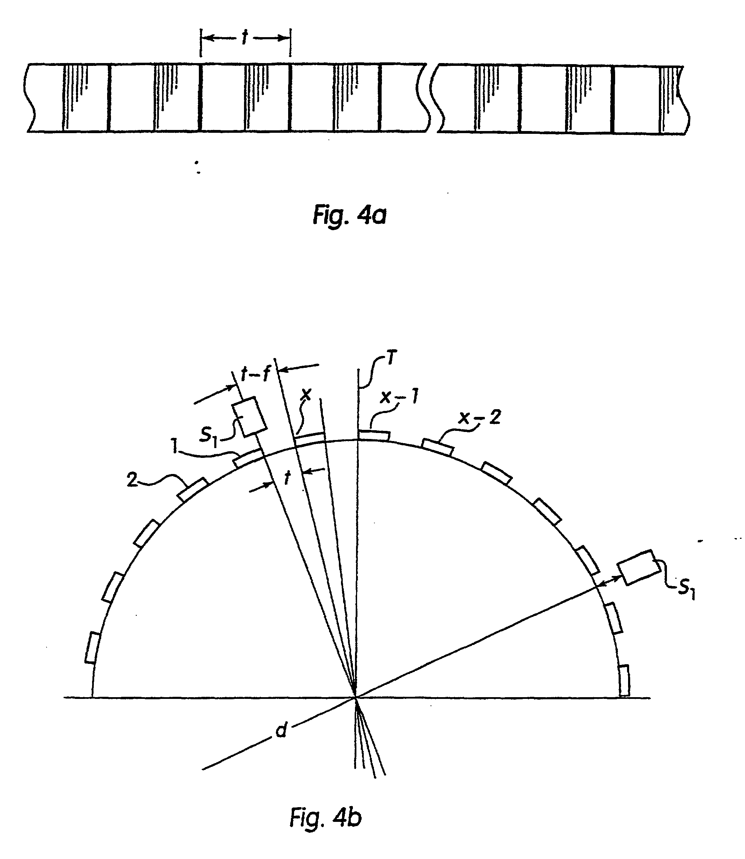

Erläuterungen zu Figur 4:
- x =: 360 Balken als Vorgabe
- 0 =: ist definiert als Startpunkt
- t =: gedruckte Teilung
- t ± f =: letzte Teilung mit einem Fehler "f" in + oder -
- T =: möglicher Spalt im Toleranzfall! Oberfläche der Welle nicht reflektierend

- Ziel :: Zur absoluten Positionierung muß ± f anteilmäßig auf jeden Schritt aufgeteilt werden

## Patentansprüche

1. Vorrichtung zur Positionserfassung von zyklisch bewegten, insbesondere rotierenden Maschinenteilen, bestehend aus einem optischen signalerzeugenden Emitter (20) und aus mindestens einem als Taktlineal ausgebildeten. Code-träger (1) mit durch Fensteröffnungen in gleichem Abstand gehaltenen Codemarken (3), die von einem ersten Sensor (4) abtastbar sind, der mit einem ersten Zählwerk (5) über erste Leitungen (6a, b) verbunden ist, die ein vom Sensor abgegebenes Codesignal weiterleiten,
**dadurch gekennzeichnet,**
**daß** bei mehreren Taktlinealen oder Taktlinealabschnitten Stoßstellen mit einem Spalt auftreten, der in seiner Breite von den Fensteröffnungen abweicht,
**daß** auf einem Sensorschlitten (7) neben dem ersten Sensor (4) ein weiterer Sensor (8) angeordnet ist, der über eine zweite Leitung (9a) mit einem ersten Comparator (10) verbunden ist, wobei der erste Comparator (10) eine erste Prüfeinrichtung (10') für die über zweite Leitung (9a) in Übereinstimmung mit den abgetasteten Fensteröffnungen empfangenen Codesignale enthält,
**daß** der erste Comparator (10) eine dritte Leitung (17) für geänderte Codesignale aufweist, deren Abstandsbreite im Vergleich zu den auf dem Codeträger (1) angeordneten Codemarken (3) verändert ist,
**daß** die dritte Leitung (17) für die geänderten Codesignale mit einem zweiten Zählwerk (11) verbunden ist,
**daß** zwischen dem ersten Sensor (4) und dem ersten Zählwerk (5) ein weiterer Comparator (12) angeordnet ist,
wobei der weitere Comparator (12) eine weitere Prüfeinrichtung (12') für die über erste Leitung (6a) empfangenen und der Breite der Fensteröffnungen entsprechenden Codesignale enthält,
**daß** Mittel zur Steuerung vorhanden sind, die die weitere Prüfeinrichtung (12') mit einer Transfereinheit (13) verbindbar macht, in der Codesignale bei Abweichungen in der Abstandsbreite der Codemarken speicherbar sind,
**daß** die Transfereinheit (13) mit dem zweiten Zählwerk (11) über vierte Leitung (15) verbunden ist,
**daß** an die Transfereinheit (13) eine fünfte Leitung (16) angeschlossenen ist, die mit dem ersten Zählwerk (5) für die Aufsummierung von Codesignalen verbunden ist
und **daß** ein Mittel zur Steuerung vorhanden ist, das über die Prüfeinrichtungen (10', 12') entweder das erste Zählwerk (5) von den ersten Leitungen (6a, b) trennt, wenn das zweite Zählwerk (11) die geänderten Codesignale speichert oder das erste Zählwerk (5) mit den ersten Leitungen (6a, b) verbindet zum Empfang neuer Signale aus dem ersten Sensor (4).

2. Verfahren zur Positionsbestimmung von bewegten Maschinenteilen, wobei ein optisches Signal von einem Emitter (20) über ein mit Strichcodemarkierungen (21) versehenes Taktlineal (22) von einem Sensor (23) empfangen wird und der Sensor (23) ein elektrisches Taktsignal entsprechend der Strichcodemarkierung an einen Zähler weitergibt,
**dadurch gekennzeichnet,**
**daß** das Taktlineal (22) auf einem drehbaren Zylinder befestigt ist und mit mindestens zwei gegeneinander unterschiedlichen Strichcodemarkierungen (21a, 21b) versehen ist, die jeweils verschiedenen Taktlinealabschnitten zugeordnet sind,
**daß** die Sensoreinheit aus zwei Einzelsensoren (23a, 23b) besteht, wobei der in Bewegungsrichtung (24) vornliegende erste Sensor (23b) bei Erreichen eines neuen Taktlinealabschnittes mit geänderten Strichcodemarkierungen (21b) einen ersten Zähler (25) des zweiten Sensors (23a) abschaltet und die Strichcodemarkierungen (21b) des neuen Taktlinealabschnittes (22b) zählt und abspeichert in einem weiteren Zähler (26) bis der zweite Sensor (23a) ebenfalls den neuen Taktlinealabschnitt (21b) erreicht und dann den weiteren Zähler (26) des ersten Sensors (23b) stillsetzt, während der erste Zähler (25) weiterzählt und die vom weiteren Zähler (26) gespeicherten Taktsignale durch Aufsummierung übernimmt und
**daß** beim Übergang von einem zum anderen Taktlinealabschnitt durch Vergleich des gemessenen Codesignals mit einem Prüfsignal eine Fehlerabweichung erkannt und dieser Fehler durch gleichmäßige Verteilung auf die aufsummierten Codemarkenabschnitte eliminiert wird.

## Claims

1. A device for recording the position of cyclically moved, especially rotating machine parts, consisting of an optical signal generating emitter (20) and of at least one code carrier (1) provided in the form of a cycle ruler and having code markings (3) which are held through window openings at identical distances from one another and which can be scanned by a first sensor (4) which is connected to a first counting mechanism (5) by means of first lines (6a, b) which pass on a code signal emitted by the sensor,
**characterised in**
**that**, if there are provided several cycle rulers or cycle ruler portions, there occur impact regions with a gap whose width deviates from the window openings,
that, on a sensor slide (7), adjacent to the first sensor (4), there is arranged a further sensor (8) which, via a second line (9a), is connected to a first comparator (10), with the first comparator (10) containing a first testing device (10') for the code signals received via the second line (9a) in accordance with the scanned window openings,
that the first comparator (10) comprises a third line (17) for changed code signals whose width of distance has been changed as compared to the code markings (3) arranged on the code carrier (1),
that the third line (17) for the changed code signals is connected to a second counting mechanism (11),
that between the first sensor (4) and the first counting mechanism (5), there is arranged a further comparator (12), with the further comparator (12) containing a further testing device (12') for the code signals received via the first line (6a) and corresponding to the width of the window openings,
that there are provided controlling means which render the further testing device (12') connectable to a transfer unit (13) in which it is possible to store code signals if deviations in the width of distance of the code markings occur,
that the transfer unit (13) is connected to the second counting mechanism (11) via a fourth line (15),
that to the transfer unit (13) there is connected a fifth line (16) connected to the first counting mechanism (5) for adding up code signals,
and that there are provided controlling means which, via the testing devices (10', 12'), separate either the first counting mechanism (5) from the first lines (6a, b) when the second counting mechanism (11) stores the changed code signals, or connect the first counting mechanism (5) to the first lines (6a, b) for the purpose of receiving new signals from the first sensor (4).

2. A method of determining the position of moved machine parts, wherein an optical signal is received by an emitter (20) from a sensor (23) via a cycle ruler (22) provided with line code markings (21) and wherein the sensor (23) passes on to a counting mechanism an electrical cycle signal in accordance with the line code marking,
**characterised in**
**that** the cycle ruler (22) is fixed to a rotatable cylinder and is provided with at least two different line code markings (21a, 21b) which are each associated with different cycle ruler portions,
that the sensor unit consists of two individual sensors (23a, 23b), wherein the first sensor (23b) positioned in front in the direction of movement (24), when a new cycle ruler portion with changed line code markings (21b) is reached, switches off a first counting mechanism (25) of the second sensor (23b) and counts the line code markings (21b) of the new cycle ruler portion (22b) and stores same in a further counting mechanism (26) until the second sensor (23a) also reaches the new cycle ruler portion (21b) and then stops the further counting mechanism (26) of the first sensor (23b) while the first counting mechanism (25) continues to count, and takes over the cycle signals stored by the further counting mechanism (26) by adding same, and
that during the transition from the one to the other cycle ruler portion, with the help of a comparison between the measured code signal and the test signal, a deviation in the form of an error is detected and that this error is eliminated by being uniformly distributed to the added code mark portions.

## Revendications

1. Dispositif pour détecter la position de pièces de machine en déplacement cyclique, en particulier en rotation, comprenant un émetteur (20) optique produisant des signaux, et au moins un support de codes (1), réalisé sous la forme d'une règle de cadencement, et doté de marques de codage (3) maintenues à la même distance à travers des ouvertures de fenêtre, lesdites marques étant susceptibles d'être palpées par un premier capteur (4) relié à un premier compteur (5) via des premières lignes (6a, 6b) qui transmettent un signal de codage fourni par le capteur,
**caractérisé en ce que**
dans le cas où il existe plusieurs règles de cadencement, ou tronçons de règles de cadencement, il se produit des emplacements d'aboutement avec un intervalle dont la largeur diffère de celle des ouvertures de fenêtre,
**en ce qu'**il est prévu un deuxième capteur (8) agencé à côté du premier capteur (4) sur un chariot de capteur (7), ledit deuxième capteur étant relié à un premier comparateur (10) via une deuxième ligne (9a), ledit premier comparateur (10) contenant un premier dispositif de vérification (10') pour les signaux de codage reçus via une deuxième ligne (9a) en coïncidence avec les ouvertures de fenêtre palpées,
**en ce que** le premier comparateur (10) comprend une troisième ligne (17) pour des signaux de codage modifiés, dont la largeur d'écartement est modifiée par comparaison aux marques de codage (3) agencées sur le support de codes (1),
**en ce que** la troisième ligne (17) pour les signaux de codage modifiés est reliée à un deuxième compteur (11),
**en ce qu'**il est prévu un autre comparateur (12) agencé entre le premier capteur (4) et le premier compteur (5),
ledit autre comparateur (12) contenant un autre dispositif de vérification (12') pour les signaux de codage reçus via la première ligne (6a) et correspondant à la largeur des ouvertures de fenêtre,
**en ce qu'**il est prévu des moyens de commande afin de connecter l'autre dispositif de vérification (12') avec une unité de transfert (13) dans laquelle des signaux de codage peuvent être mémorisés en cas de divergence dans la largeur d'écartement des marques de codage,
**en ce que** l'unité de transfert (13) est reliée au deuxième compteur (11) via une quatrième ligne (15),
**en ce qu'**à l'unité de transfert (13) est raccordée une cinquième ligne (16), laquelle est reliée au premier compteur (5) pour la sommation des signaux de codage, et
**en ce qu'**il est prévu un moyen de commande qui, par l'intermédiaire des dispositifs de vérification (10', 12'), soit sépare le premier compteur (5) vis-à-vis des premières lignes (6a, 6b) lorsque le deuxième compteur (11) mémorise les signaux de codage modifiés, soit relie le premier compteur (5) avec les premières lignes (6a, 6b) pour la réception de nouveaux signaux provenant du premier capteur (4).

2. Procédé pour la détermination de position de pièces de machine en mouvement, dans lequel un signal optique provenant d'un émetteur (20) via une règle de cadencement (22) pourvue d'un marquage à codes barres (21) est reçu par un détecteur (23), et le détecteur (23) transmet à un compteur un signal de cadencement électrique correspondant au marquage à codes barres,
**caractérisé en ce que**
la règle de cadencement (22) est fixée sur un cylindre en rotation, et elle est pourvue d'au moins deux marquages à codes barres (21a, 21b) différents l'un de l'autre, qui sont respectivement associés à des tronçons différents de règle de cadencement,
**en ce que** l'unité de détection est formée de deux détecteurs individuels (23a, 23b), parmi lesquels le détecteur (23b) disposé en avant dans la direction de déplacement (24) arrête un premier compteur (25) du deuxième détecteur (23a) lorsqu'il atteint un nouveau tronçon de règle de cadencement avec un marquage à codes barres modifié (21b), et compte les marquages à codes barres (21b) du nouveau tronçon de règle de cadencement et mémorise dans un autre compteur (26) jusqu'à ce que le deuxième détecteur (23a) a également atteint le nouveau tronçon de règle de cadencement (21b), et met alors à l'arrêt l'autre compteur (26) du premier détecteur (23b) tandis que le premier compteur (25) poursuit son décompte et reprend par sommation les signaux de cadencement mémorisés dans l'autre compteur (26), et
**en ce qu'**au passage d'un tronçon de règle de cadencement à l'autre, par comparaison du signal de codage mesuré avec un signal de contrôle, on reconnaît un écart d'erreur, et cette erreur est éliminée par répartition régulière sur les tronçons de marquage de codage sommés.
